# EUROPÄISCHE PATENTANMELDUNG

(11) **EP 0 836 910 A1**
(43) Veröffentlichungstag der Anmeldung: **22.04.1998**
(21) Anmeldenummer: 97116272.2
(22) Anmeldetag: 18.09.1997
(51) Int. Cl.: B23Q 39/04, B23D 45/14

(54) **Doppelgehrungssäge mit zusätzlichen Bearbeitungseinheiten**

(30) Priorität: 17.10.1996 DE 19642923
(71) Anmelder: RAPID MASCHINENBAU GmbH, 72131 Ofterdingen (DE)
(72) Erfinder: Letzgus, Karl, 72108 Rottenburg-Dettingen (DE)
(74) Vertreter: Weber, Otto Ernst, Dipl.-Phys.

(57) **Zusammenfassung**

Die Erfindung betrifft eine Doppelgehrungssäge (10) mit einem Maschinenbett (11), einer Werkstückaufspannung, durch die ein Werkstück (5) in einer definierten Lage in einem Bezugssystem auf dem Maschinenbett (11) positionierbar ist, und einer Steuer- und Meßeinrichtung, durch die die Lage von Sägeköpfen (12,13) auf dem Maschinenbett (11) in dem Bezugssystem ermittelbar ist. Weiterhin ist eine zusätzliche Bearbeitungseinheit (30,40,50) vorgesehen, die unabhängig von einer Bewegung und Verstellung der Sägeköpfe (12,13) und relativ zu dem Werkstück (5) bewegbar gelagert ist. Die Bearbeitungseinheit ist mit der Steuer- und Meßeinrichtung koppelbar, wobei durch die Steuer- und Meßeinrichtung die Lage der Bearbeitungseinheit in demselben Bezugssystem ermittelbar ist.

## Beschreibung

Die Erfindung betrifft eine Doppelgehrungssäge mit einem Maschinenbett, einer Werkstückaufspannung, durch die ein Werkstück in einer definierten Lage in einem Bezugssystem auf dem Maschinenbett positionierbar ist, zwei auf dem Maschinenbett angeordneten Sageköpfen mit schwenkbaren Sägeblättern, von denen mindestens ein Sagekopf relativ zu dem auf der Werkstückaufspannung positionierten Werkstück bewegbar und verstellbar ist, und einer Steuer- und Meßeinrichtung, durch die die Lage der Sägeköpfe in dem Bezugssystem ermittelbar ist.

Doppelgehrungssägen werden vor allem zur Bearbeitung von Metall- oder Kunststoffprofilen für verschiedenste Rahmenkonstruktionen eingesetzt. Neben der Sägebearbeitung sind an derartigen Werkstücken noch weitere Bearbeitungsschritte auszuführen, beispielsweise Bohren oder Fräsen. Diese zusätzlichen Bearbeitungsschritte werden in der Regel an von der Doppelgehrungssäge getrennten Bearbeitungsmaschinen ausgeführt. Aufgrund des notwendigen Transports der Werkstücke zwischen den einzelnen Bearbeitungsmaschinen ist eine derartige getrennte Bearbeitung relativ aufwendig.

Zur Verbesserung der Bearbeitung ist bekannt, einen Sägekopf gemeinsam mit einer Bohrvorrichtung auszubilden, wobei die Bohrvorrichtung mitfahrend an dem Sägekopf angebaut ist. Durch diese Anordnung ist die Lage und Art der Bearbeitung, bedingt durch die Bauform der Säge, stark eingeschränkt. Auch kann eine Bedienung nur von der Vorderseite der Doppelgehrungssäge her erfolgen.

Der Erfindung liegt die **Aufgabe** zugrunde, eine Doppelgehrungssäge der genannten Art anzugeben, mit der Werkstücke in besonders wirtschaftlicher Weise bearbeitet werden können.

Die Aufgabe wird erfindungsgemäß dadurch gelöst, daß mindestens eine zusätzliche Bearbeitungseinheit vorgesehen ist, die unabhängig von einer Bewegung und Verstellung des Sägekopfes und relativ zu dem Werkstück bewegbar gelagert ist, daß die Bearbeitungseinheit mit der Steuer- und Meßeinrichtung koppelbar ist, und daß durch die Steuer- und Meßeinrichtung die Lage der Bearbeitungsarbeit in demselben Bezugssystem ermittelbar ist. Ein Grundgedanke der Erfindung basiert darauf, eine Doppelgehrungssäge als einen Multifunktionsträger für weitere Bearbeitungseinheiten auszubilden. Das Bezugssystem der Doppelgehrungssäge, durch welches die relative Lage eines aufgespannten Werkstücks zu den Sägeköpfen angegeben ist, wird erfindungsgemäß für die weiteren Bearbeitungen an den anderen Bearbeitungsstationen genutzt. Das Positioniersystem der Doppelgehrungssäge kann also gleichzeitig als Anschlag- bzw. Mitnehmereinrichtung für die weiteren Bearbeitungseinheiten verwendet werden. Die erfindungsgemäße Doppelgehrungssäge weist dabei definierte Anschlußstellen auf, mit denen eine beliebige Anzahl weiterer Bearbeitungseinheiten steuerungstechnisch mit der Doppelgehrungssäge verbunden werden kann.

Hierdurch wird der Aufwand für die Steuerung der Bearbeitungsvorgänge reduziert, da mit der einen Steuerung der Doppelgehrungssäge gearbeitet werden kann. Durch die freie Verstellbarkeit der einzelnen Bearbeitungseinheiten ist eine nahezu uneingeschränkte Bearbeitung der Werkstücke möglich.

Eine besonders flexible Bearbeitung wird erfindungsgemäß dadurch ermöglicht, daß mindestens ein Sägekopf bewegbar auf dem Maschinenbett gelagert ist.

Eine weitere Flexibilisierung der Bearbeitung wird dadurch erreicht, daß die Werkstückaufspannung einen Anschlag aufweist, welcher die definierte Lage des Werstücks in dem Bezugssystem bestimmt, und daß eine Verstelleinrichtung vorgesehen ist, durch die der Anschlag bewegbar ist. Mit dem Anschlag kann auch das Werkstück verschoben werden, so daß die Verstelleinrichtung gleichzeitig als eine Zuführ- oder Mitnehmereinrichtung zum Zuführen der Werkstücke zu den einzelnen Bearbeitungseinheiten dient.

Eine bevorzugte Ausführungsform der Erfindung besteht darin, daß der Anschlag eine Greifereinrichtung umfaßt, durch die das Werstück in eine definierte Lage bringbar ist. Der Anschlag umfaßt dabei Greifer oder Klauen, welche das Werkstück form- oder kraftschlüssig erfassen können. Durch diese Erfassung kann das Werkstück in mehrere Richtungen verfahren und so in einer beliebigen Lage positioniert werden.

Für eine besonders vielfältige Werkstückeinspannung und Positionierung ist es erfindungsgemäß vorgesehen, daß eine Werstückaufspannung mit mehreren Aufspannebenen vorvorgesehen ist.

Eine schnelle Bearbeitung des Werkstücks an verschiedenen Stellen wird erfindungsgemäß dadurch ermöglicht, daß die Bearbeitungseinheit bewegbar auf dem Maschinenbett gelagert ist.

Eine andere bevorzugte Ausführungsform der Erfindung besteht darin, daß die Bearbeitungseinheit von dem Maschinenbett getrennt angeordnet ist. So können Bearbeitungseinheiten außerhalb der Doppelgehrungssäge angebracht werden, mit denen jegliche Art und Lage von Bearbeitungen durchführbar sind. Die eingesetzten Bearbeitungseinheiten können aus herkömmlichen Einzellösungen zusammengesetzt werden. Insbesondere können bestehende Einzelmaschinen gemäß der Erfindung eingesetzt werden, sofern eine Möglichkeit zur Kopplung mit dem Bezugssystem der Doppelgehrungssäge besteht.

Zur Durchführung umfangreicher Bearbeitungen an einem Werkstück ist es vorteilhaft, daß mehrere Bearbeitungseinheiten vorgesehen sind, von denen mindestens eine an dem Maschinenbett gelagert und mindestens eine von dem Maschinenbett getrennt angeordnet sind. Es ist nicht notwendig, die Sägen in jedem Fall mit zu betreiben.

Bezüglich der möglicherweise anfallenden Bearbeitungen an einem Werkstück ist es bevorzugt, daß die Bearbeitungseinheit eine Bohreinrichtung aufweist.

Grundsätzlich dient die Steuer- und Meßeinrichtung zunächst zur Ermittlung und Anzeige der Lage des Werkstücks relativ zu den Sägeköpfen sowie den weiteren Bearbeitungseinheiten in dem Bezugssystem. Die einzelnen Verstellbewegungen können dann entsprechend der Anzeige der Steuer- und Meßeinrichtung von Hand ausgeführt werden. Für eine weitgehend automatisierte Fertigung ist es jedoch vorteilhaft, daß die Lage der Sägeköpfe und der Bearbeitungseinheit relativ zu dem Werkstück durch die Steuer- und Meßeinrichtung verstellbar ist. Das Verstellen der einzelnen Elemente wird dabei durch geeignete Verstellorgane erreicht, beispielsweise durch motorgetriebene Spindeln oder Verstellzylinder.

Die Erfindung wird weiter anhand eines Ausführungsbeispiels erläutert, welches schematisch in der Zeichnung dargestellt ist. In der Zeichnung zeigen:
- Fig. 1: eine Seitenansicht einer erfindungsgemäßen Doppelgehrungssäge;
- Fig. 2: eine Vorderansicht der erfindungsgemäßen Doppelgehrungssäge nach Fig. 1 mit einer externen Bearbeitungseinheit; und
- Fig. 3: eine Draufsicht auf die erfindungsgemäße Doppelgehrungssäge nach Fig. 2 mit einer Abwandlung des Anschlagsystems.

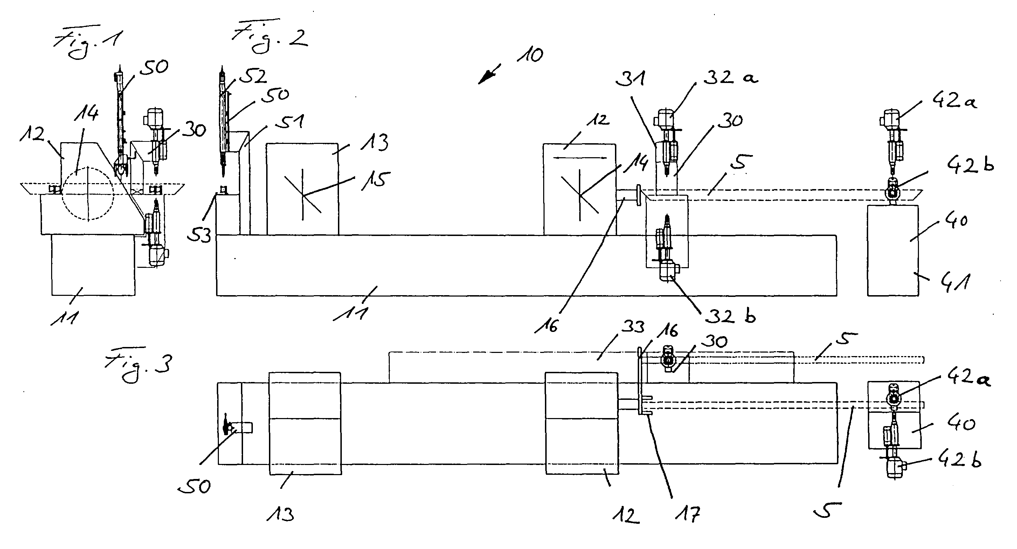

Eine erfindungsgemäße Doppelgehrungssäge 10 ist in den Figuren 1 bis 3 in verschiedenen geklappten Ansichten dargestellt. Die Doppelgehrungssäge 10 umfaßt ein längliches und im Querschnitt rechteckiges Maschinenbett 11, auf dem zwei Sägeköpfe 12, 13 angeordnet sind. Kreisförmige Sägeblätter 14, 15 sind jeweils in Gehäusen der Sägeköpfe 12 bzw. 13 angeordnet. Zur Ausführung von Gehrungsschnitten sind die Sägeblätter 14, 15 aus einer vertikalen Lage schwenkbar gelagert, wie schematisch in Fig. 2 dargestellt ist. Der Sägekopf 12 ist horizontal in der gezeigten Pfeilrichtung verfahrbar, während der Sägekopf 13 bei dieser Ausführungsform stationär auf dem Maschinenbett 11 angeordnet ist.

An dem Sägekopf 12 ist ein Anschlag 16 angebracht, dessen Anschlagfläche in einem Bezugssystem der Steuer- und Meßeinrichtung definiert ist. Der Anschlag 16 ist Teil einer nicht dargestellten Werkstückaufspannung, welche ein üblicher Aufnahmetisch sein kann, auf dem ein Werkstück 5 abgelegt ist. Wie zu erkennen ist, sind an dem Werkstück 5 bereits Gehrungsschnitte an den seitlichen Ende durchgeführt worden.

Für weitere Bearbeitungsvorgänge sind erfindungsgemäß zusätzliche Bearbeitungseinheiten 30, 40, 50 vorgesehen. Die erste Bearbeitungseinheit 30 ist über eine Verfahrbahn 33 mit dem Maschinenbett 11 verbunden und gegenüber diesem separat verfahrbar. Die Bearbeitungseinheit 30 umfaßt ein C-förmiges Gestell 31, an welchem zwei Bohreinrichtungen 32a und 32b mit vertikaler Bohrspindel zur beidseitigen Bearbeitung des Werkstücks 5 befestigt sind.

Die zweite Bearbeitungseinheit 40 ist eine Einzelmaschine, die getrennt von dem Maschinenbett 11 aufgestellt ist. An einem Gestell 41 der zweiten Bearbeitungseinheit 40 ist eine vertikal gerichtete Bohreinrichtung 42a und eine horizontal gerichtete Bohreinrichtung 42b angeordnet. Die länglichen Werkstücke 5, welche üblicherweise Profile sind, werden durch den mit dem Sägekopf 12 verfahrbaren Anschlag 16 von der Werkstückaufspannung auf dem Maschinenbett 11 zu der externen Bearbeitungseinheit 40 geschoben. Die Positionierung des Werkstücks 5 in der externen Bearbeitungseinheit 40 erfolgt dabei ebenfalls über die Steuer- und Meßeinrichtung der Doppelgehrungssäge 10 in einem einheitlichen Bezugssystem. Diese extern angeordnete Bearbeitungseinheit 40 kann bei Bedarf wieder von der Doppelgehrungssäge 10 entfernt und als eine Einzelmaschine mit einem anderen, eigenen Bezugssystem eingesetzt werden.

Eine dritte Bearbeitungseinheit 50 mit einem Gestell 51 und einer vertikal gerichteten Bohreinrichtung 52 ist an einer Frontseite der Doppelgehrungssäge 10 stationär angeordnet. Das Gestell 51 umfaßt einen am Maschinenbett 11 angeordneten Sockel, an dem sich eine stirnseitige Arbeitsebene 53 befindet.

In Figur 3 ist eine abgewandelte Ausführung des in Fig. 2 gezeigten Anschlags 16 dargestellt. Der abgewandelte Anschlag 16 weist eine Greifereinrichtung 17 auf, mit der das Werkstück 5 fest erfaßt werden kann. Auf diese Weise kann durch den verfahrbaren Anschlag 16 das Werkstück 5 in mehrere Richtungen verfahren werden und so in einer beliebigen Lage positioniert werden. Bei mehreren Aufspannebenen kann beispielsweise das Werkstück 5 durch die Greifereinrichtung 17 nach dem Sägen umgelegt werden, um in dieser geänderten Lage weiter bearbeitet zu werden. Mit der erfindungsgemäßen Doppelgehrungssäge 10 ist es folglich möglich, zahlreiche zusätzliche Bearbeitungseinheiten platz- und kostensparend zentral anzuordnen. Die zusätzlichen Bearbeitungseinheiten können dabei die Steuer- und Meßeinrichtung, die Verstelleinrichtung für das Werkstück 5 und weitere Einrichtungen der Doppelgehrungssäge 10, beispielsweise eine zentrale Absaugung, verwenden. Aufgrund dieser kompakten Ausbildung und der hohen Flexibilität in bezug auf verschiedenste Bearbeitungen kann eine wirtschaftliche Fertigung von Profilstücken erreicht werden.

## Patentansprüche

1. Doppelgehrungssäge mit einem Maschinenbett (11), einer Werkstückaufspannung, durch die ein Werkstück (5) in einer definierten Lage in einem Bezugssystem auf dem Maschinenbett (11) positionierbar ist, zwei auf dem Maschinenbett (11) angeordneten Sägeköpfen (12, 13) mit schwenkbaren Sägeblättern (14, 15), von denen mindestens ein Sägekopf (12) relativ zu dem in der Werkstückaufspannung positionierten Werkstück (5) bewegbar und verstellbar ist, und einer Steuer- und Meßeinrichtung, durch die Lage der Sägeköpfe (12, 13) in dem BeBezugssystem ermittelbar ist,
dadurch **gekennzeichnet**,
daß mindestens eine zusätzliche Bearbeitungseinheit (30, 40) vorgesehen ist, die unabhängig von einer Bewegung und Verstellung des Sägekopfes (12) und relativ zu dem Werkstück (5) bewegbar gelagert ist,
daß die Bearbeitungseinheit (30, 40) mit der Steuer- und Meßeinrichtung koppelbar ist, und
daß durch die Steuer- und Meßeinrichtung die Lage der Bearbeitungseinheit (30, 40) in demselben Bezugssystem ermittelbar ist.

2. Doppelgehrungssäge nach Anspruch 1,
dadurch **gekennzeichnet**,
daß mindestens ein Sägekopf (12) bewegbar auf dem Maschinenbett (11) gelagert ist.

3. Doppelgehrungssäge nach Anspruch 1 oder 2,
dadurch **gekennzeichnet**,
daß die Werkstückaufspannung einen Anschlag (16) aufweist, welcher die definierte Lage des Werkstücks (5) in dem Bezugssystem bestimmt, und daß eine Verstelleinrichtung vorgesehen ist, durch die der Anschlag (16) bewegbar ist.

4. Doppelgehrungssäge nach Anspruch 3,
dadurch **gekennzeichnet**,
daß der Anschlag (16) eine Greifereinrichtung (17) umfaßt, durch die das Werkstück (5) in eine definierte Lage bringbar ist.

5. Doppelgehrungssäge nach einem der Ansprüche 1 bis 4,
dadurch **gekennzeichnet**,
daß eine Werkstückaufspannung mit mehreren Aufspannebenen vorgesehen ist.

6. Doppelgehrungssäge nach einem der Ansprüche 1 bis 5,
dadurch **gekennzeichnet**,
daß die Bearbeitungseinheit (30) bewegbar auf dem Maschinenbett (11) gelagert ist.

7. Doppelgehrungssäge nach einem der Ansprüche 1 bis 5,
dadurch **gekennzeichnet**,
daß die Bearbeitungseinheit (40) von dem Maschinenbett (11) getrennt angeordnet ist.

8. Doppelgehrungssäge nach einem der Ansprüche 1 bis 7,
dadurch **gekennzeichnet**,
daß mehrere Bearbeitungseinheiten (30, 40, 50) vorgesehen sind, von denen mindestens eine an dem Maschinenbett (11) gelagert und mindestens eine von dem Maschinenbett (11) getrennt angeordnet sind.

9. Doppelgehrungssäge nach einem der Ansprüche 1 bis 8,
dadurch **gekennzeichnet**,
daß die Bearbeitungseinheit (30, 40, 50) eine Bohreinrichtung (32, 42, 52) aufweist.

10. Doppelgehrungssäge nach einem der Ansprüche 1 bis 9,
dadurch **gekennzeichnet**,
daß die Lage der Sägeköpfe (12, 13) und der Bearbeitungseinheit (40, 50) relativ zu dem Werkstück (5) durch die Steuer- und Meßeinrichtung verstellbar ist.
